# EUROPEAN PATENT SPECIFICATION

(11) **EP 3 572 316 B1**
(45) Date of publication and mention of the grant of the patent: **27.09.2023**
(21) Application number: 17892246.4
(22) Date of filing: 28.08.2017
(51) Int. Cl.: B63H 23/24

(54) **UNDERWATER PROPULSION DEVICE, AND CONTROL SYSTEM AND CONTROL METHOD THEREOF**
UNTERWASSERANTRIEBSVORRICHTUNG SOWIE STEUERUNGSSYSTEM UND STEUERUNGSVERFAHREN DAFÜR
DISPOSITIF DE PROPULSION SOUS-MARIN, ET SYSTÈME DE COMMANDE ET PROCÉDÉ DE COMMANDE ASSOCIÉS

(30) Priority: 23.01.2017 CN 201710051263
(43) Date of publication of application: 27.11.2019
(73) Proprietor: Guangdong ePropulsion Technology Limited, Dongguan, Guangdong Province (CN)
(72) Inventor: LIANG, Guojian, Guangdong 523808 (CN); WEI, Zhizhou, Guangdong 523808 (CN); ZHONG, Yanli, Guangdong 523808 (CN); TAO, Shizheng, Guangdong 523808 (CN); WAN, Xiaokang, Guangdong 523808 (CN)
(74) Representative: Zaboliene, Reda
(86) International application number: PCT/CN2017/099240
(87) International publication number: WO 2018/133413

(56) References cited:
- WO-A1-97/39924
- WO-A1-2004/007276
- WO-A1-2016/144852
- CN-A- 1 309 894
- CN-A- 106 864 717
- CN-U- 203 593 146
- CN-U- 203 965 941
- KR-B1- 101 205 843
- US-A1- 2008 122 655
- US-B2- 7 497 181

## Description

### FIELD

The subject matter herein generally relates to underwater propulsion apparatus, and particularly relates to an underwater propulsion apparatus for watercrafts and a control system and method thereof.

### BACKGROUND

Small watercrafts such as canoes, rubber boats, dinghies, rafts, kayaks, sailboats, fishing boats, stand-up boards or the like are commonly equipped with a power device to drive faster in water. Such a power device is usually called an underwater propulsion apparatus. Due to a small power of such kind of underwater propulsion apparatus, motors and propellers are generally used as propulsion device for the underwater propulsion apparatus, a remote controller is used for controlling the power, and a battery is used for supplying electric power. A conventional propulsion apparatus usually uses a throttle that is directly connected to the propulsion apparatus to control power of the underwater propulsion apparatus, which requires an extra particular fixing mechanism on a particular carrier to assemble the throttle to the underwater propulsion apparatus and lead to complex structures of the underwater propulsion apparatus.

Due to the fact that the resistance of small-size watercrafts to water wave impact is poor, a passenger can easily fall into water. When the passenger falls into water, if the underwater propulsion apparatus is not powered off timely, an accident may occur. On one hand, the drowning passenger is in danger. On the other hand, the underwater propulsion apparatus may be damaged itself. US20080122655A1 discloses a security system (100) for use on a boat comprising a central unit (1), one or several personal units (2), repeaters (4) and relay boxes (5). Each component includes a radio module. The central unit (1) forms a master and the other components form nodes of a multi-hop network, which 10 wirelessly exchanges information between the components. WO2004/007276A1 discloses a security system (100) for use on a boat with propulsion means, such as an engine, having a base unit (101) mounted on the boat and a personal unit (102) attached to the driver and to each passenger. The base unit (101) has a first radio unit (201) and an RFID-reader (200) with an antenna, and is in wireless communication with the personal unit (102). The personal unit (102) has an RFID-transponder (302) and a second radio unit (300), both with a unique identity, and a biometric unit (308) that at correct attachment to the person sends a biometric signal to the base unit (102). The communication utilises RFID technology within a near range (A), but the system (100, 500) automatically handovers to radio technology when a larger area is to be covered. A field from the RFID reader (200) activates the RFID-transponder, and if the identity is correct the person is registered as the driver and may start the boat. When the base unit (101) loses communication with a personal unit (102) different measures are initiated, such as activating an alarm (307, 206, 207). WO1997/039924A1 discloses an engine kill switch system (10) having a transmitter (12) and receiver (14) which are linked through specific transmitted codes within a frequency. The receiver (14) is mounted directly on the boat and wired to an engine kill switch (10), maintaining the switch (10) in the closed position as long as a signal is received from all of the activated transmitters (12). Once the transmitter signal is unintentionally deactivated, the receiver (14) shuts down the engine. A range adjustment (20) allows the separation distance between the transmitter (12) and receiver (14) to be changed, dependent upon the size of the boat and end use. A strobe and audio warning (22) can also be attached to the receiver (14) and activated simultaneously with the deactivation of the engine. The transmitter (12) has a programmed unique code recognized by the receiver (14). The system (10) can also be used as an antitheft device simply by removal of one transmitter (12), thereby rendering the engine inoperable.

### SUMMARY OF THE INVENTION

This invention relates to a control system for an underwater propulsion apparatus capable of judging passenger water falling and stopping the motor. The wirelessly controlled underwater propulsion apparatus comprises a wireless connection between the remote control and propulsion apparatus, which increases conveniences of attachment when attaching the propulsion apparatus to different watercrafts.

In addition, an underwater propulsion apparatus and a control method thereof are also provided.

A control system includes a remote controller and a motor driving device. The remote controller and the motor driving device are wirelessly connected. The remote controller is configured for transmitting a wireless signal to the motor driving device. The motor driving device includes a communication repeater module and a motor driving module. The communication repeater module is configured for detecting whether a wireless signal is transmitted by the remote controller, receiving and forwarding the wireless signal, and outputting a corresponding control signal to the motor driving module according to the wireless signal.

In one embodiment, the motor driving module is communicatively connected to the communication repeater module, and configured for receiving the control signal transmitted from the communication repeater module, and outputting a driving signal for driving a motor according to the control signal.

In one embodiment, when the communication repeater module fails to receive the wireless signal, the motor is controlled to stop running.

In one embodiment, the control system further includes a battery, wherein the battery is electrically connected to the communication repeater module and the motor driving module respectively, configured for providing a first voltage for the communication repeater module and providing a second voltage for the motor driving module .

In one embodiment, the control system further includes a solar charging module, wherein the solar charging module is electrically connected to the battery, the solar charging module is configured for charging the battery by solar energy.

In one embodiment, each of the battery, the communication repeater module, the motor driving module, and the motor are independently and separately set in different protective housings respectively or assembly combined in a protective housing.

In one embodiment, the battery and the communication repeater module are received and assembled into a first housing together, the motor driving module and the motor are received and assembled into a second housing, the battery is electrically connected to the motor driving module by a positive wire and a negative wire passing through the first housing and the second housing, the communication repeater module is electrically connected to the motor driving module by a communication line passing through the first housing and the second housing, the housing is sealed by using sealing ring or glue.

In one embodiment, the communication repeater module and the motor driving module are positioned above the water, the communication repeater module and the motor driving module are wired or wirelessly connected, the motor driving module and the motor are wired connected.

In one embodiment, the communication repeater module is positioned above the water, the motor driving module is positioned underwater. According to the invention, the communication repeater module and the motor driving module are wired connected. The motor driving module and the motor can be wired connected.

In one embodiment, the remote controller includes a built-in rechargeable battery, the remote controller is powered by the built-in rechargeable battery.

In one embodiment, the remote controller further includes an external solar panel, the rechargeable battery and the solar panel are connected by a solar charging circuit, and the solar panel charges the built-in rechargeable battery through the solar charging circuit.

According to the invention, the remote controller further includes a magnetic field strength detecting unit.

The magnetic field strength detecting unit includes a first magnetic sensor, a second magnetic sensor, a sliding groove, a sliding block, and a magnet, the first magnetic sensor and the second magnetic sensor are spaced apart from each other, the sliding groove is positioned between the first magnetic sensor and the second magnetic sensor, the sliding block is slidably connected to the sliding groove, the magnet is positioned on the sliding block.

In one embodiment, the remote controller further includes a power management unit, the power management unit is configured for controlling the remote controller to stop running if the remote controller does not receive a feedback signal of the communication repeater module within a preset time.

An underwater propulsion apparatus includes a motor and the above-mentioned control system.

A control method for an underwater propulsion apparatus, based on a control system comprising a remote controller, a battery, and a motor driving device, the battery configured for supplying electric power for the motor driving device, the motor driving device comprising a communication repeater module and a motor driving module, the control method comprising:
the remote controller transmits a wireless signal;
the communication repeater module detects whether the wireless signal transmitted by the remote controller is received, receiving and forwarding the wireless signal to the motor, and outputting a control signal to the motor driving module;
the motor driving module outputs a driving signal for driving the motor; according to the control signal; and
if the communication repeater module fails to receive the wireless signal from the remote controller, the motor driving module outputs the driving signal to control the motor to stop running or transmits a command to the battery to power off the motor.

The above-mentioned underwater propulsion apparatus, control system, and control method, determines whether the remote controller is beyond a preset range or has fallen into the water by detecting whether there is a communication signal between the remote controller and the motor driving device, and further determines whether the passenger has fallen into the water, thereby determining whether the passenger falls into water and timely controlling the motor to stop running through the motor driving device when the passenger falls into water to avoid accidents.

### BRIEF DESCRIPTION OF THE DRAWINGS

FIG. 1 is a schematic view of one embodiment of an underwater propulsion apparatus connected to a watercraft.
FIG. 2 is a schematic view of the underwater propulsion apparatus.
FIG. 3 is a block diagram of one embodiment of a control system of the underwater propulsion apparatus.
FIG. 4 is a schematic view of a device for detecting throttle signal.
FIG. 5 is a block diagram of one embodiment of a motor driving device of the underwater propulsion apparatus.

### DETAILED DESCRIPTION

Further description will be made below in conjunction with the accompanying drawings and specific embodiments.

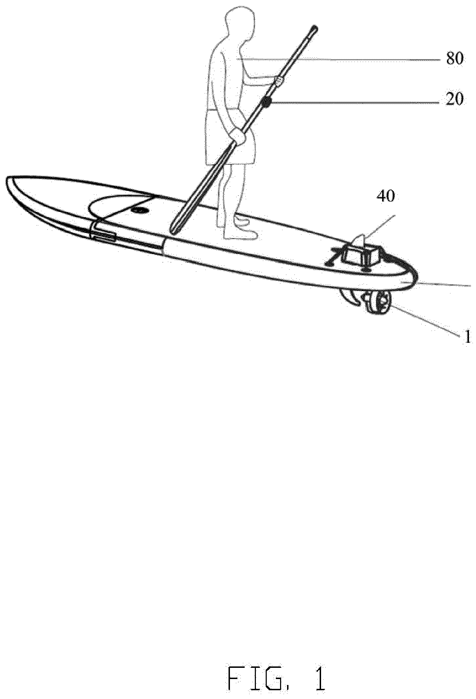

FIG. 1 illustrates one embodiment of an underwater propulsion apparatus 10 connected to a watercraft 90. When the underwater propulsion apparatus 10 is assembled to the watercraft 90, in an orientation as shown in FIG. 1, the underwater propulsion apparatus 10 is positioned at a bottom portion of the watercraft 90. When the watercraft 90 is in the water, the underwater propulsion apparatus 10 operates underwater and provides motive power to the watercraft 90. In this embodiment, the watercraft 90 is equipped with a control system for the underwater propulsion apparatus 10, and specifically includes a remote controller 20 and a motor driving device 30. The remote controller 20 is connected to the motor driving device 30 by wireless communication. The remote controller 20 is configured for transmitting a wireless signal to the motor driving device. The motor driving device is configured for outputting a driving signal to drive a motor according to the wireless signal. The watercraft 90 can include a paddle. The remote controller 20 can be carried by a user 80, and also can be assembled to the paddle or in other suitable positions of the watercraft 90.

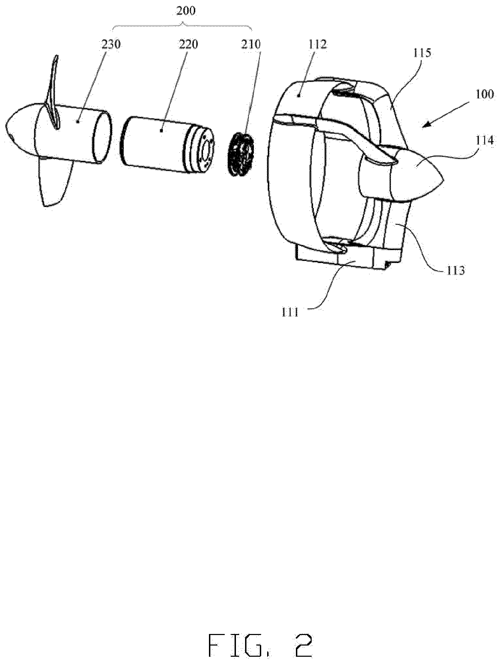

As shown in FIG. 2, the underwater propulsion apparatus 10 includes a main supporter 100 and a power output structure 200 assembled to the main supporter 100.

In an embodiment, the main supporter 100 includes a base 111, an annular frame body 112 positioned on the base 111, a supporting arm 113 extending upward from the base 111, and a cylindrical housing 114 positioned at an tail end of the supporting arm 113. Wherein, the axial direction of the annular frame body 112 is parallel to that of the cylindrical housing 114. The cylindrical housing 114 and the annular frame body 112 are further interconnected with each other through fixing arms 115. A number of the fixing arms 115 can be multiple, and extends from the cylindrical housing 114 to the annular frame body 112 in a radial shape, and extends to the annular frame body 112.

The power output structure 200 includes a driver board 210, a motor 220, and a propeller 230 connected in sequence. The driver board 210 is a circuit board assembly capable of controlling the motor 220. The motor 220 outputs power for driving the propeller 230 to rotate under the control of the driver board 210, thereby providing propulsion to the watercraft underwater.

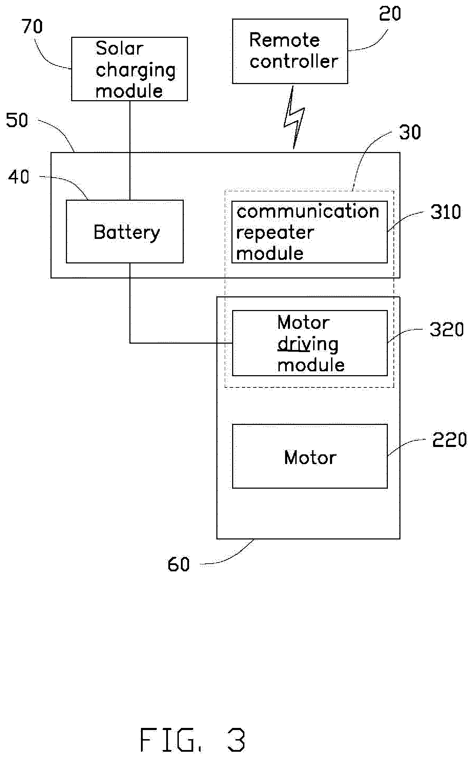

FIG. 3 shows a block diagram of one embodiment of a control system of the underwater propulsion apparatus. The control system includes a remote controller 20 and a motor driving device 30. The remote controller 20 is wirelessly connected to the motor driving device 30 for transmitting a wireless signal to the motor driving device 30. The motor driving device 30 is configured for outputting the driving signal to drive the motor 220 according to the wireless signal. Wherein, the motor driving device 30 can include a communication repeater module 310 and a motor driving module 320. The communication repeater module 310 is connected to the remote controller 20 by a wireless communication connection. The communication repeater module 310 is configured for detecting whether the wireless signal is transmitted by the remote controller 20, and for receiving and forwarding the wireless signal to the motor driving module 320. The motor driving module 320 is wired connected to the communication repeater module 310 for receiving the wireless signal, and outputs the driving signal for driving the motor 220 according to the wireless signal. When the motor drive module 320 fails to receive the wireless signal, the motor stops running.

When the remote controller 20 drives the motor 220 to operate by the motor driving device 30, the remote controller 20 transmits the wireless signal to the motor driving device 30 at a predetermined time interval. The remote controller 20 is generally carried by the user 80 or assembled to the paddle held by a user, depending on more convenient operation for the user. The communication repeater module 310 can detect whether there is a communication failure between the remote controller 20 and the motor driving device 30 which is continued for a certain period of time or whether the wireless signal transmitted by the remote controller 20 is not received for a certain period of time, thereby determining whether the remote controller 20 is beyond a preset range or falls into the water. When the remote controller 20 falls into the water, the wireless signals will be rapidly attenuated in the water, and the motor driving device 30 will not receive the wireless signal from the remote controller 20. Thus, the motor driving device 30 can determine that the remote controller 20 has fallen into water, and control the motor 220 to stop running.

The above-mentioned control system for the underwater propulsion apparatus can timely control the motor to stop running by the motor driving device 30 when the user passenger falls into water, thereby avoiding the occurrence of accidents and protecting the drowning passenger, the underwater propulsion apparatus, and the watercraft.

The above-mentioned control system can further include a battery 40. The battery 40 is electrically connected to the communication repeater module 310 and the motor driving module 320, respectively. The battery 40 is configured for providing a first voltage, generally 5V, for the communication repeater module 310, and also for providing a second voltage, generally 24V, for the motor driving module 320. In other embodiment, the control system can further include a solar charging module 70. The solar charging module 70 is electrically connected to the battery 40. The solar charging module 70 is configured for charging the battery 40 by solar energy.

The battery 40 is wired connected to the communication repeater module 310, the motor driving module 320, and the motor 220, and configured for supplying power to the communication repeater module 310, the motor driving module 320, and the motor 220. The communication repeater module 310 is positioned above the water and wirelessly communicates with the remote controller. The motor driving module 320 can be positioned above the water or underwater. When the motor driving module 320 is positioned above the water, the communication repeater module 310 and the motor driving module 320 can be wired or wirelessly connected, and the motor driving module 320 and the motor 220 are wired connected. When the motor driving module 320 is positioned underwater, the communication repeater module 310 and the motor driving module 320 are wired connected, and the motor driving module 320 and the motor 220 are wired connected too.

Each of the battery 40, the communication repeater module 310, the motor driving module 320, and the motor 220 can be independently and separately set in different protective housings respectively or assembly combined in a protective housing.

In an embodiment, the battery 40 and the communication repeater module 310 are received and assembled into a first housing 50 together. The motor driving module 320 and the motor 220 are received and assembled into a second housing 60 (which can be the cylindrical housing 114 shown in FIG. 2). Generally, the first housing 50 is positioned on the watercraft 90 above the water, and the second housing 60 is positioned on the watercraft 90 underwater. The battery 40 is electrically connected to the motor driving module 320 positioned underwater by a positive wire and a negative wire passing through the first housing 50 and the second housing 60 for providing power to the motor driving module 320. The communication repeater module 310 is electrically connected to the motor driving module 320 by a communication line passing through the first housing 50 and the second housing 60. The motor driving module 320 can be positioned on the driver board 210 shown in FIG. 2. The first housing 50 and the second housing 60 may be sealed by using sealing ring or glue.

Since the wireless communication underwater can be affected by interference, using the above-mentioned structure, the communication repeater module 310 wirelessly communicating with the remote controller 20 is positioned above the water, and simultaneously the communication repeater module 310 is also wired connected to the motor driving module 320 positioned underwater. As such, signal transmission qualities and stability of communication between the communication repeater module 310, the remote controller 20, and the motor driving module 32 can be ensured. In addition, the battery 40 positioned above the water is also safe.

In other embodiment, the motor driving module 320 can also be positioned in the first housing 50 together with the battery 40, and then the motor driving module 320 and the motor 220 can be wired connected. Alternatively, the battery 40, the motor driving module 320, and the motor 220 can be independent of each other, rather than being centrally received and assembled into one housing.

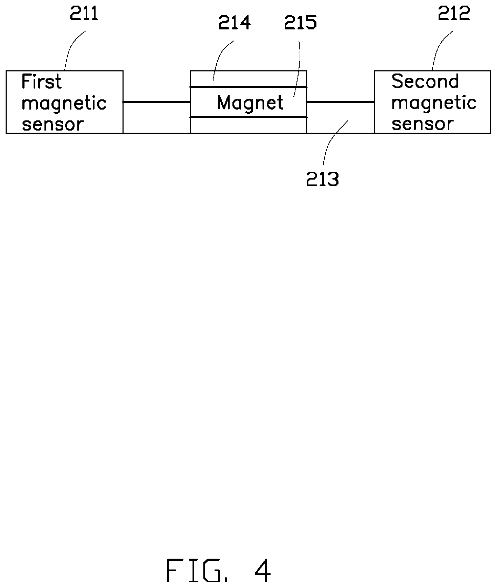

In an embodiment, as shown in FIG. 4, the remote controller 20 can further include a magnetic field strength detecting unit. In this embodiment, the magnetic field strength detecting unit includes a first magnetic sensor 211, a second magnetic sensor 212, a sliding groove 213, a sliding block 214, and a magnet 215. The first magnetic sensor 211 and the second magnetic sensor 212 are spaced apart from each other. The sliding groove 213 is positioned between the first magnetic sensor 211 and the second magnetic sensor 212. The sliding block 214 is slidably connected to the sliding groove 213. The magnet 215 is positioned on the sliding block 214.

When the underwater propulsion apparatus 10 is running, the battery 40 provides power for the operation of the underwater propulsion apparatus 10. When the watercraft moves, the remote controller 20 obtains a magnetic field strength of the magnet 215 through the dual magnetic sensors, thereby calculating the wireless signal of the remote controller 20 for controlling the power of the motor 220, and transmitting the wireless signal to the communication repeater module 310 by means of the wireless communication connection. The communication repeater module 310 is further transmitted the wireless signals to the motor driving module 320 by a wire. The motor driving module 320 adjusts the power of the motor 220 based on the wireless signals.

The remote controller 20 calculates a power control amount according to the detected magnetic field strength of the magnet. Meanwhile, for extending a length of a sliding distance of the magnet, the magnetic field strength is obtained by the dual sensors. The magnetic field strength between the two sensors can be changed by moving the sliding block 314.

In an embodiment, the remote controller 20 may further include a power management unit. The power management unit is configured for controlling the remote controller 20 to stop running if the remote controller 20 does not receive a feedback signal of the communication repeater module 310 within a preset time for saving power.

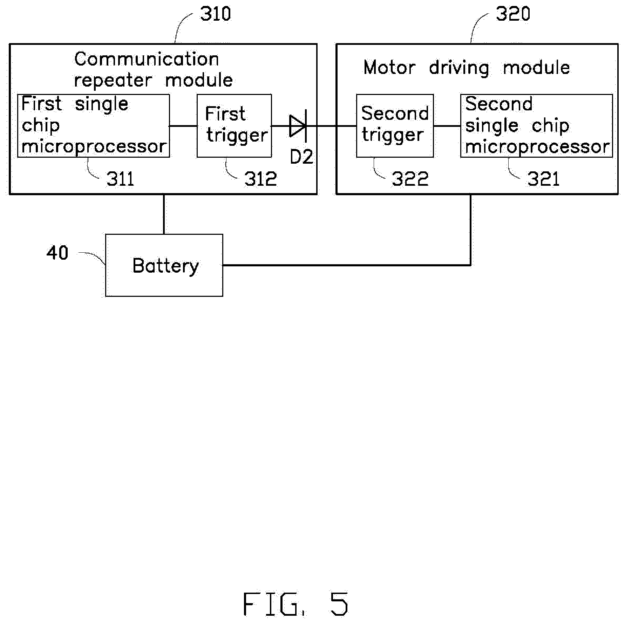

In an embodiment, referring to FIG. 5, the communication repeater module 310 can include a first single chip microprocessor 311, a first trigger 312, and a diode D2. The motor driving module 320 can include a second single chip microprocessor 321 and a second trigger 322. The first single chip microprocessor 311, the first trigger 312, the diode D2, the second trigger 322, and the second single chip microprocessor 321 are connected in sequence. The first trigger 312 is connected to the anode of the diode D2, and the second trigger 322 is connected to the cathode of the diode D2.

A length of each of the communication line, the battery positive electrode wire and the battery negative electrode wire generally reaches to 1.5 meters. Because of the long communication line, if the first single chip microprocessor 311 and the second single chip microprocessor 321 are directly connected through the communication line when the motor 220 operates, the motor 220 will cause interferences to the negative pole of the battery 40. That may cause an increase in a bit error rate in the way of single-line communication on every single line. In severe cases, the first single chip microprocessor 311 and the second single chip microprocessor 321 become communicate failure. Therefore, the two triggers (i.e. the first trigger 312 and the second trigger 322) are added to the communication line to improve anti-interference capability in the single-line communication way.

In addition, if the negative wire between the battery 40 and the motor driving module 320 is disconnected earlier than the positive wire between the battery 40 and the motor driving module 320 during plugging or unplugging connectors to the battery 40, since a voltage of the positive electrode of the battery 40 is about 24V, electric current will flow from the positive electrode of the battery 40 to the negative electrode of the battery 40 through the communication line. In this situation, the communication repeater module 310 may be damaged because of the high voltage, which is beyond the maximum rated voltage (about 3.3V) of the first single chip microprocessor 311, the first trigger 312, the second single chip microprocessor 321, and the second trigger 322. By connecting the diode D2 in series with the communication line, even if the negative wire between the battery 40 and the motor driving module 320 is disconnected, the electric current cannot flow back to the negative electrode of the battery 40 through the communication line, thereby protecting each component from being damaged, and effectively improving a security of the system.

Based on a same inventive concept, a method for controlling an underwater propeller is provided below. The method is based on the above-mentioned control system and includes:
Step S100, the remote controller transmits a wireless signal.
Step S200, the communication repeater module detects whether a wireless signal transmitted by the remote controller is received, receives and forwards the wireless signal, and outputs a control signal to the motor driving module.
Step S300, the motor driving module outputs a driving signal for driving the motor according to the control signal. If the communication repeater module does not receive the wireless signal from the remote controller, the motor driving module will outputs the driving signal to stop running the motor or transmits a command to the battery to power off the motor.

In above-mentioned control method, when the remote controller 20 control the motor 220 to be driven by the motor driving device 30, the remote controller 20 transmits the wireless signal to the motor driving device 30 at a predetermined time interval. The communication repeater module 310 can detect whether a communication failure between the remote controller 20 and the motor driving device 30 is continued for a period of time, or whether the wireless signal transmitted by the remote controller 20 is not received for a certain period of time, thereby determining whether the remote controller 20 is beyond a preset range or has fallen into the water and further determining whether the passenger has fallen into the water. When the remote controller 20 falls into the water, the wireless signal in the water will attenuate, and the motor driving device 30 will not receive the wireless signal from the remote controller 20. Thus, the motor driving device 30 can determine that the remote controller 20 is in water, and control the motor 220 to stop running.

The above-mentioned control system for the underwater propulsion apparatus can timely control the motor to stop running through the motor driving device 30 when the passenger falls into water, thereby avoiding occurrence of accidents and protecting the drowning passenger, the underwater propulsion apparatus, and the watercraft.

The above-mentioned control system can be used in the underwater propulsion apparatus 10.

It should be noted that, the above embodiments are merely to illustrate the technical solutions of the present disclosure, it is not intended to be limited, although the preferred examples with reference to the present disclosure have been described in detail, the person skilled in the art should be understood that the present disclosure may be modification or equivalent replacement, without departing from the scope of the present disclosure.

## Claims

1. A control system for an underwater propulsion apparatus (10), the control system comprising:
a remote controller (20); and
a motor driving device (30), the remote controller (20) configured for transmitting a wireless signal to the motor driving device (30), the motor driving device (30) comprising:
a communication repeater module (310); and
a motor driving module (320), wherein the communication repeater module (310) and the motor driving module (320) are wired connected, the remote controller (20) and the communication repeater module (310) are wirelessly connected, the communication repeater module (310) is configured for detecting whether the wireless signal is transmitted by the remote controller (20), receiving and forwarding the wireless signal, and outputting a corresponding control signal to the motor driving module (320) according to the wireless signal, the motor driving module (320) is communicatively connected to the communication repeater module (310), and configured for receiving the control signal transmitted from the communication repeater module (310), and outputting a driving signal for driving a motor (220) according to the control signal, when the communication repeater module (310) fails to receive the wireless signal, the motor (220) is controlled to stop running;
wherein the remote controller (20) comprises a magnetic field strength detecting unit, the magnetic field strength detecting unit comprises first and second magnetic sensors (211, 212), a sliding groove (213), a sliding block (214), and a magnet (215), the sliding block (214) is slidably connected to the sliding groove (213), the magnet (215) is positioned on the sliding block (214).

2. The control system of claim 1, wherein when the remote controller (20) drives the motor (220) to operate by the motor driving device (30), the remote controller (20) transmits the wireless signal to the motor driving device (30) at a predetermined time interval, the communication repeater module (310) detects whether there is a communication failure between the remote controller (20) and the motor driving device (30) continued for a certain period of time, thereby determining whether the remote controller (20) is beyond a preset range, when the remote controller (20) is beyond the preset range, the motor driving device (30) fails to receive the wireless signal from the remote controller (20).

3. The control system of claim 1, further comprising a battery (40), wherein the battery (40) is electrically connected to the communication repeater module (310) and the motor driving module (320) respectively, configured for providing a first voltage for the communication repeater module (310) and providing a second voltage for the motor driving module (320).

4. The control system of claim 3, further comprising a solar charging module (70), wherein the solar charging module (70) is electrically connected to the battery (40), the solar charging module (70) is configured for charging the battery (40) by solar energy.

5. The control system of claim 3, wherein each of the battery (40), the communication repeater module (310), the motor driving module (320), and the motor (220) are independently and separately set in different protective housings or assembly combined in a protective housing, the housings are sealed by using sealing ring or glue.

6. The control system of claim 1, wherein the communication repeater module (310) is positioned above the water, the motor driving module (320) is positioned underwater, the motor driving module (320) and the motor (220) are wired connected.

7. The control system of claim 1, wherein the remote controller (20) comprises a built-in rechargeable battery, the remote controller (20) is powered by the built-in rechargeable battery.

8. The control system of claim 7, wherein the remote controller (20) further comprises an external solar panel, the rechargeable battery and the solar panel are connected by a solar charging circuit, and the solar panel charges the built-in rechargeable battery through the solar charging circuit.

9. The control system of claim 1, wherein the first magnetic sensor (211) and the second magnetic sensor (212) are spaced apart from each other, the sliding groove (213) is positioned between the first magnetic sensor (211) and the second magnetic sensor (212).

10. The control system of claim 1, wherein the remote controller (20) further comprises a power management unit, the power management unit is configured for controlling the remote controller (20) to stop running if the remote controller (20) does not receive a feedback signal of the communication repeater module (310) within a preset time.

11. An underwater propulsion apparatus (10), comprising a motor (220) and the control system of claim 1-10.

12. A control method for an underwater propulsion apparatus (10), based on a control system comprising a remote controller (20), a battery (40), and a motor driving device (30), the battery (40) configured for supplying electric power for the motor driving device (30), the motor driving device (30) comprising a communication repeater module (310) and a motor driving module (320), the control method comprising:
the remote controller (20) transmits a wireless signal;
the communication repeater module (310) detects whether the wireless signal transmitted by the remote controller (20) is received, receiving and forwarding the wireless signal to the motor (220), and outputs a control signal to the motor driving module (320);
the motor driving module (320) outputs a driving signal for driving the motor (220), according to the control signal; and
if the communication repeater module (310) does not receive the wireless signal from the remote controller (20), the motor driving module (320) outputs the driving signal to control the motor (220) to stop running or transmits a command to the battery (40) to power off the motor (220);
wherein the communication repeater module (310) and the motor driving module (320) are wired connected, the remote controller (20) and the communication repeater module (310) are wirelessly connected, the remote controller (20) comprises a magnetic field strength detecting unit, the magnetic field strength detecting unit comprises first and second magnetic sensors (211, 212), a sliding groove (213), a sliding block (214), and a magnet (215), the sliding block (214) is slidably connected to the sliding groove (213), the magnet (215) is positioned on the sliding block (214).

## Patentansprüche

1. Ein Steuersystem für eine Unterwasserantriebsvorrichtung (10), wobei das Steuersystem umfasst:
eine Fernbedienung (20); und eine Motorantriebsvorrichtung (30), wobei die Fernbedienung (20) zum Übertragen eines drahtlosen Signals an die Motorantriebsvorrichtung (30) konfiguriert ist, wobei die Motorantriebsvorrichtung (30) umfasst: ein Kommunikations-Repeater-Modul (310); und ein Motorantriebsmodul (320), wobei das Kommunikations-Repeater-Modul (310) und das Motorantriebsmodul (320) drahtgebunden verbunden sind, die Fernbedienung (20) und das Kommunikations-Repeater-Modul (310) drahtlos verbunden sind, das Kommunikations-Repeater-Modul (310) ist zum Erkennen, ob das Funksignal von der Fernbedienung (20) gesendet wird, zum Empfangen und Weiterleiten des Funksignals und zum Ausgeben eines entsprechenden Steuersignals an das Motorantriebsmodul (320) gemäß dem Funksignal, dem Motor, konfiguriert. Das Antriebsmodul (320) ist kommunikativ mit dem Kommunikations-Repeater-Modul (310) verbunden und zum Empfangen des vom Kommunikations-Repeater-Modul (310) übertragenen Steuersignals und zum Ausgeben eines Antriebssignals zum Antreiben eines Motors (220) entsprechend der Steuerung konfiguriert Signal: wenn das Kommunikations-Repeater-Modul (310) das Funksignal nicht empfängt, wird der Motor (220) so gesteuert, dass er nicht mehr läuft, wobei die Fernbedienung (20) eine Einheit zur Erfassung der magnetischen Feldstärke umfasst, wobei die Einheit zur Erfassung der magnetischen Feldstärke 16 V beträgt, eine Gleitnute (213), einem Gleitblock (214) und einem Magneten (215), der Gleitblock (214) ist verschiebbar mit der Gleitnute (213) verbunden, der Magnet (215) ist auf dem Gleitblock (214) positioniert.

2. Das Steuersystem nach Anspruch 1, wobei die Fernbedienung (20) das drahtlose Signal an die Motorantriebsvorrichtung überträgt, wenn die Fernbedienung (20) den Motor (220) zum Betrieb durch die Motorantriebsvorrichtung (30) antreibt. 30) In einem vorbestimmten Zeitintervall erkennt das Kommunikations-Repeater-Modul (310), ob ein Kommunikationsfehler zwischen der Fernbedienung (20) und dem Motorantriebsgerät (30) vorliegt, der über einen bestimmten Zeitraum andauert, und bestimmt so, ob die Fernbedienung, wenn sich die Fernbedienung (20) außerhalb eines voreingestellten Bereichs befindet, kann das Motorantriebsgerät (30) das Funksignal von der Fernbedienung (20) nicht empfangen, wenn sich die Fernbedienung (20) außerhalb des voreingestellten Bereichs befindet.

3. Das Steuersystem nach Anspruch 1, das außerdem eine Batterie (40) umfasst, wobei die Batterie (40) elektrisch mit dem Kommunikations-Repeater-Modul (310) bzw. dem Motorantriebsmodul (320) verbunden ist und zur Bereitstellung einer ersten Spannung für das Kommunikations-Repeater-Modul (310) und zum Bereitstellen einer zweiten Spannung für das Motorantriebsmodul (320) konfiguriert ist.

4. Das Steuerungssystem nach Anspruch 3, weiterhin umfassend ein Solarlademodul (70), wobei das Solarlademodul (70) elektrisch mit der Batterie (40) verbunden ist und das Solarlademodul (70) zum Laden der Batterie (40) durch Sonnenenergie konfiguriert ist.

5. Das Steuersystem nach Anspruch 3, wobei die Batterie (40), das Kommunikations-Repeater-Modul (310), das Motorantriebsmodul (320) und der Motor (220) jeweils unabhängig und separat in unterschiedlichen Schutzgehäusen untergebracht sind Montage in einem Schutzgehäuse zusammengefasst, die Gehäuse werden mittels Dichtringes oder Kleber abgedichtet.

6. Das Steuersystem nach Anspruch 1, wobei das Kommunikations-Repeater-Modul (310) über dem Wasser positioniert ist, das Motorantriebsmodul (320) unter Wasser positioniert ist, das Motorantriebsmodul (320) und der Motor (220) über Kabel miteinander verbunden sind.

7. Das Steuersystem nach Anspruch 1, wobei die Fernbedienung (20) eine eingebaute wiederaufladbare Batterie umfasst und die Fernbedienung (20) von der eingebauten wiederaufladbaren Batterie mit Strom versorgt wird.

8. Das Steuersystem nach Anspruch 7, wobei die Fernbedienung (20) außerdem ein externes Solarpanel umfasst, die wiederaufladbare Batterie und das Solarpanel über einen Solarladekreis verbunden sind und das Solarpanel die eingebaute wiederaufladbare Batterie den Solarladekreis auflädt.

9. Das Steuersystem nach Anspruch 1, wobei der erste magnetische Sensor (211) und der zweite magnetische Sensor (212) voneinander einen Abstand behält, ist die Gleitnute (213) zwischen dem ersten Magnetsensor (211) und dem zweiten Magnetsensor (212) positioniert.

10. Das Steuersystem nach Anspruch 1, wobei die Fernbedienung (20) außerdem eine Energieverwaltungseinheit umfasst, wobei die Energieverwaltungseinheit so konfiguriert ist, dass sie die Fernbedienung (20) so steuert, dass sie den Betrieb stoppt, wenn die Fernbedienung (20) keinen Empfang ein Rückmeldungssignal des Kommunikations-Repeater-Moduls (310) innerhalb einer voreingestellten Zeit empfängt.

11. Die Unterwasserantriebsvorrichtung (10), umfassend einen Motor (220) und das Steuersystem nach Anspruch 1-10.

12. Ein Steuerverfahren für eine Unterwasserantriebsvorrichtung (10), basierend auf einem Steuersystem, das eine Fernbedienung (20), eine Batterie (40) und eine Motorantriebsvorrichtung (30) umfasst, wobei die Batterie (40) zur Versorgung konfiguriert ist elektrische Energie für die Motorantriebsvorrichtung (30), wobei die Motorantriebsvorrichtung (30) ein Kommunikations-Repeater-Modul (310) und ein Motorantriebsmodul (320) umfasst, wobei das Steuerverfahren Folgendes umfasst: die Fernbedienung (20) sendet ein drahtloses Signal; das Kommunikations-Repeater-Modul (310) erkennt, ob das von der Fernbedienung (20) gesendete Funksignal empfangen wird, empfängt das Funksignal und leitet es an den Motor (220) weiter und gibt ein Steuersignal an das Motorantriebsmodul (320) aus; das Motorantriebsmodul (320) gibt entsprechend dem Steuersignal ein Antriebssignal zum Antreiben des Motors (220) aus; und, wenn das Kommunikations-Repeater-Modul (310) das Funksignal von der Fernbedienung (20) nicht empfängt, gibt das Motorantriebsmodul (320) das Antriebssignal aus, um den Motor (220) so zu steuern, dass er den Betrieb stoppt, oder sendet einen Befehl an die Batterie (40) zum Ausschalten des Motors (220) weiter; wobei das Kommunikations-Repeater-Modul (310) und das Motorantriebsmodul (320) drahtgebunden verbunden sind, die Fernbedienung (20) und das Kommunikations-Repeater-Modul (310) drahtlos verbunden sind, die Fernbedienung (20) eine Magnetfeldstärkeerkennung umfasst eine Einheit, wobei die Magnetfeldstärke-Erfassungseinheit erste und zweite Magnetsensoren (211, 212) umschließt, eine Gleitnute (213), ein Gleitblock (214) und ein Magnet (215), der Gleitblock (214) ist verschiebbar und mit der Gleitnute (213) verbunden, der Magnet (215) ist auf dem Gleitblock (214) positioniert.

## Revendications

1. Système de commande pour un appareil de propulsion sous-marine (10), le système de commande comprenant :
une télécommande (20) ; et
un dispositif d'entraînement du moteur (30), la télécommande (20) configurée pour transmettre un signal sans fil au dispositif d'entraînement du moteur (30), le dispositif d'entraînement du moteur (30) comprenant :
un module répéteur de communication (310) ; et
un module d'entraînement du moteur (320), dans lequel le module répéteur de communication (310) et le module d'entraînement du moteur (320) sont reliés par câble, la télécommande (20) et le module répéteur de communication (310) sont connectés sans fil, le module répéteur de communication (310) est configuré pour détecter si le signal sans fil est transmis par la télécommande (20), recevoir et transmettre le signal sans fil, et délivrer un signal de commande correspondant au module d'entraînement de moteur (320) selon le signal sans fil, le module d'entraînement de moteur (320) est connecté en communication au module répéteur de communication (310), et configuré pour recevoir le signal de commande transmis depuis le module répéteur de communication (310), et émettre un signal d'entraînement pour entraîner un moteur (220) selon le signal de commande, lorsque le module répéteur de communication (310) ne parvient pas à recevoir le signal sans fil, le moteur (220) est commandé pour s'arrêter de tourner ;
dans lequel la télécommande (20) comprend une unité de détection d'intensité de champ magnétique, l'unité de détection d'intensité de champ magnétique comprend les premiers et seconds capteurs magnétiques (211, 212),
une rainure coulissante (213), un bloc coulissant (214) et un aimant (215), le bloc coulissant (214) est relié de manière coulissante à la rainure coulissante (213), l'aimant (215) est positionné sur le bloc coulissant (214).

2. Système de commande selon la revendication 1, dans lequel lorsque la télécommande (20) entraîne le moteur (220) pour qu'il fonctionne par le dispositif d'entraînement de moteur (30), la télécommande (20) transmet le signal sans fil au dispositif d'entraînement de moteur (30) à un intervalle de temps prédéterminé, le module répéteur de communication (310) détecte s'il y a une panne de communication entre la télécommande (20) et le dispositif d'entraînement de moteur (30) qui s'est poursuivie pendant une certaine période de temps, déterminant ainsi si la télécommande (20) est au-delà d'une plage prédéfinie, lorsque la télécommande (20) est au-delà de la plage prédéfinie, le dispositif d'entraînement de moteur (30) ne parvient pas à recevoir le signal sans fil de la télécommande (20).

3. Système de commande selon la revendication 1, comprenant en outre une batterie (40), dans lequel la batterie (40) est connectée électriquement au module répéteur de communication (310) et au module de commande de moteur (320) respectivement, configurée pour fournir une première tension pour le module répéteur de communication (310) et fournissant une seconde tension pour le module d'entraînement du moteur (320).

4. Système de commande selon la revendication 3, comprenant en outre un module de charge solaire (70), dans lequel le module de charge solaire (70) est connecté électriquement à la batterie (40), le module de charge solaire (70) est configuré pour charger la batterie (40) par l'énergie solaire.

5. Système de commande selon la revendication 3, dans lequel la batterie (40), le module répéteur de communication (310), le module d'entraînement de moteur (320) et le moteur (220) sont indépendamment et séparément placés dans différents boîtiers de protection ou ensemble combiné. dans un boîtier de protection, les boîtiers sont scellés à l'aide d'une bague d'étanchéité ou de colle.

6. Système de commande selon la revendication 1, dans lequel le module répéteur de communication (310) est positionné au-dessus de l'eau, le module d'entraînement du moteur (320) est positionné sous l'eau, le module d'entraînement du moteur (320) et le moteur (220) sont connectés par câble.

7. Système de commande selon la revendication 1, dans lequel la télécommande (20) comprend une batterie rechargeable intégrée, la télécommande (20) est alimentée par la batterie rechargeable intégrée.

8. Système de commande selon la revendication 7, dans lequel la télécommande (20) comprend en outre un panneau solaire externe, la batterie rechargeable et le panneau solaire sont connectés par un circuit de charge solaire, et le panneau solaire charge la batterie rechargeable intégrée via le circuit de charge solaire.

9. Système de commande selon la revendication 1, dans lequel
le premier capteur magnétique (211) et le deuxième capteur magnétique (212) sont espacés l'un de l'autre, la rainure de coulissement (213) est positionnée entre le premier capteur magnétique (211) et le deuxième capteur magnétique (212).

10. Système de commande selon la revendication 1, dans lequel la télécommande (20) comprend en outre une unité de gestion de l'alimentation, l'unité de gestion de l'alimentation est configurée pour commander à la télécommande (20) d'arrêter de fonctionner si la télécommande (20) ne reçoit pas de signal de retour du module répéteur de communication (310) dans un délai prédéfini.

11. Appareil de propulsion sous-marine (10), comprenant un moteur (220) et le système de commande selon la revendication 1-10.

12. Procédé de commande pour un appareil de propulsion sous-marine (10), basé sur un système de commande comprenant une télécommande (20), une batterie (40) et un dispositif d'entraînement de moteur (30), la batterie (40) configurée pour fournir de l'énergie électrique au dispositif d'entraînement de moteur (30), le dispositif d'entraînement de moteur (30) comprenant un module répéteur de communication (310) et un module d'entraînement de moteur (320), le procédé de commande comprenant :
la télécommande (20) transmet un signal sans fil ;
le module répéteur de communication (310) détecte si le signal sans fil transmis par la télécommande (20) est reçu, reçoit et transmet le signal sans fil au moteur (220), et délivre un signal de commande au module d'entraînement du moteur (320) ;
le module d'entraînement de moteur (320) délivre un signal d'entraînement pour entraîner le moteur (220), selon le signal de commande ; et
si le module répéteur de communication (310) ne reçoit pas le signal sans fil de la télécommande (20), le module d'entraînement du moteur (320) émet le signal d'entraînement pour commander le moteur (220) afin qu'il s'arrête ou transmette une commande à la batterie (40) pour éteindre le moteur (220) ;
dans lequel le module répéteur de communication (310) et le module d'entraînement de moteur (320) sont connectés par câble, la télécommande (20) et le module répéteur de communication (310) sont connectés sans fil, la télécommande (20) comprend une unité de détection d'intensité de champ magnétique, l'unité de détection d'intensité de champ magnétique comprend les premiers et seconds capteurs magnétiques (211, 212),
une rainure coulissante (213), un bloc coulissant (214) et un aimant (215), le bloc coulissant (214) est relié de manière coulissante à la rainure coulissante (213), l'aimant (215) est positionné sur le bloc coulissant (214).
